# EUROPÄISCHE PATENTANMELDUNG

(11) **EP 3 671 932 A1**
(43) Veröffentlichungstag der Anmeldung: **24.06.2020**
(21) Anmeldenummer: 19204977.3
(22) Anmeldetag: 24.10.2019
(51) Int. Cl.: H01M 10/0525, H01M 10/0569, H01M 2/16, H01M 4/62, H01M 4/38, H01M 4/42, H01M 4/485, H01M 4/505, H01M 4/525, H01M 4/587, H01M 4/60

(54) **SEKUNDÄRE GALVANISCHE ZELLE**

(30) Priorität: 20.12.2018 DE 102018222385
(71) Anmelder: Continental Reifen Deutschland GmbH, 30165 Hannover (DE)
(72) Erfinder: Finger, Sebastian - c/o Continental AG, 30419 Hannover (DE); Hojdis, Nils Walter - c/o Continental AG, 30419 Hannover (DE); Huang, Menglong - c/o Continental AG, 30419 Hannover (DE)
(74) Vertreter: Saal, Hilkka

(57) **Zusammenfassung**

Die vorliegende Erfindung betrifft eine sekundäre galvanische Zelle, umfassend eine Kathode, eine Anode und einen Separator, der zwischen der Kathode und der Anode angeordnet ist, wobei die Kathode ein erstes elastomeres Polymer umfasst, welches mit einem ersten Füllstoff als Kathodenmaterial gefüllt ist, wobei die Anode ein zweites elastomeres Polymer umfasst, welches mit einem zweiten Füllstoff als Anodenmaterial gefüllt ist, wobei der Separator ein drittes elastomeres Polymer umfasst, wobei das erste elastomere Polymer, das zweite elastomere Polymer und das dritte elastomere Polymer unabhängig voneinander aus vernetzungsfähigen Dienkautschuken ausgewählt sind, und wobei zumindest eines von dem ersten elastomeren Polymer, dem zweiten elastomeren Polymer und dem dritten elastomeren Polymer eine ionische Flüssigkeit und/oder ein elektrisch leitfähiges Polymer enthält. Die vorliegende Erfindung betrifft ferner eine wiederaufladbare Batterie, umfassend die erfindungsgemäße sekundäre galvanische Zelle, ein Verfahren zur Herstellung einer sekundären galvanischen Zelle sowie die Verwendung der erfindungsgemäßen sekundären galvanischen Zelle sowie der erfindungsgemäßen wiederaufladbaren Batterie.

## Beschreibung

Die vorliegende Erfindung betrifft eine sekundäre galvanische Zelle, umfassend eine Kathode, eine Anode und einen Separator, der zwischen der Kathode und der Anode angeordnet ist, wobei die Kathode ein erstes elastomeres Polymer umfasst, welches mit einem ersten Füllstoff als Kathodenmaterial gefüllt ist, wobei die Anode ein zweites elastomeres Polymer umfasst, welches mit einem zweiten Füllstoff als Anodenmaterial gefüllt ist, wobei der Separator ein drittes elastomeres Polymer umfasst, wobei das erste elastomere Polymer, das zweite elastomere Polymer und das dritte elastomere Polymer unabhängig voneinander aus vernetzungsfähigen Dienkautschuken ausgewählt sind, und wobei zumindest eines von dem ersten elastomeren Polymer, dem zweiten elastomeren Polymer und dem dritten elastomeren Polymer eine ionische Flüssigkeit und/oder ein elektrisch leitfähiges Polymer enthält. Die vorliegende Erfindung betrifft ferner eine wiederaufladbare Batterie, umfassend die erfindungsgemäße sekundäre galvanische Zelle, ein Verfahren zur Herstellung einer sekundären galvanischen Zelle sowie die Verwendung der erfindungsgemäßen sekundären galvanischen Zelle sowie der erfindungsgemäßen wiederaufladbaren Batterie.

Galvanische Zellen sind elektrochemische Elemente, die grundsätzlich zumindest zwei Elektroden und einen Elektrolyten umfassen. Es wird dabei systematisch zwischen primären galvanischen Zellen, umgangssprachlich auch Batterie genannt, sekundären galvanischen Zellen, umgangssprachlich auch Akkumulator oder Akku genannt, sowie tertiären galvanischen Zellen, häufig auch als Brennstoffzelle bezeichnet, unterschieden. Charakteristisch für primäre galvanische Zellen ist, dass diese Zellen nur einmalig entladen werden können. Sekundäre galvanische Zellen können hingegen nach einer Entladung durch eine gegenüber der Entladung gegenläufige Stromrichtung wieder aufgeladen werden. Die Energiedichte von sekundären galvanischen Zellen ist allerdings im Vergleich zu primären galvanischen Zellen bei gleicher Temperatur meistens geringer. Bei den tertiären galvanischen Zellen wird der chemische Energieträger (zumeist Wasserstoff) nicht in der Zelle gespeichert, sondern von außen kontinuierlich zur Verfügung gestellt. Diese Art der Zuführung ermöglicht einen kontinuierlichen und im Prinzip zeitlich unbeschränkten Betrieb.

Primäre und sekundäre galvanische Zellen werden im großen Umfang in nahezu allen Bereichen der Technik eingesetzt. Da in den letzten Jahren insbesondere die Elektromobilität an Aufmerksamkeit gewonnen hat, ist gleichzeitig auch das Interesse an sekundären galvanischen Zellen (also Akkumulatoren) stark gestiegen. Die Herausforderungen für die Automobilindustrie liegen hier insbesondere darin, die Energiedichte der Akkumulatoren zu erhöhen, um auf diese Weise größere Reichweiten für Elektrofahrzeuge zu ermöglichen.

Wiederaufladbare sekundäre galvanische Elemente werden in zahlreichen mobilen Geräten verwendet, insbesondere auf Basis von Lithiumionen. In diesem Fall ist der mikroporöse Separator zwischen Kathode und Anode eine Polymermatrix, die aus Thermoplasten wie beispielsweise Polyethylen (PE) oder Polypropylen (PP) besteht. Einige Varianten verwenden feste Polymerelektrolyte. Lithium-Polymer-Batterien sind aufgrund ihres geringen Gewichts beispielsweise der Stand der Technik für mobile Geräte. In diesen Vorrichtungen ist auch der Elektrolyt ein Polymer, beispielsweise auf Basis von Polyethylenoxid (PEO), Polyacrylnitril (PAN), Polymethylmethacrylat (PMMA), Polytrimethylencarbonat (PTMC) oder Polyvinylidenfluorid (PVDF). Bei diesen Polymeren handelt es sich ebenfalls um Thermoplaste oder aber zumindest um Polymere mit einem sehr begrenzten elastomeren Verhalten.

Der Nachteil dieser herkömmlichen sekundären galvanischen Zellen liegt aber darin, dass diese im Wesentlichen steif sind, d.h. zumindest ein nicht-flexibles Element aufweisen. Daher können derartige sekundäre galvanische Zellen nicht in elastomere Verbindungen bzw. Bauteile integriert werden, da dies sowohl die Haltbarkeit der elastomeren Verbindungen bzw. Bauteile als auch die Haltbarkeit der steifen sekundären galvanischen Zellen vermindern würde. In der Literatur wurde eine Batterie mit Elektroden auf Basis von Polyvinylidenfluorid (PVDF) vorgeschlagen (siehe P. Liu et al., Journal of Power Sources 2009, 189, 646-650). PVDF wird üblicherweise in elektronischen Bauteilen wie beispielsweise Mikrophonen eingesetzt, vornehmlich aufgrund seiner piezoelektrischen Eigenschaften. Diese Batterie hat aber den Nachteil einer unzureichenden Umweltverträglichkeit, da diese auf einem fluorhaltigen Polymer beruht. Weiterhin ist PVDF kaum elastisch; das reine Polymer ist nur bis etwa 20% dehnbar. Daher ist dieses Polymer kein elastomeres Polymer im Sinne der vorliegenden Erfindung und für elastische Anwendungen kaum geeignet. Darüber hinaus nimmt die Leitfähigkeit bei dieser Batterie mit zunehmender Vernetzungsdichte ab, was sich gleichzeitig nachteilig auf die elastischen Eigenschaften der Batterie auswirkt.

Der vorliegenden Erfindung liegt daher die Aufgabe zugrunde, eine sekundäre galvanische Zelle bereitzustellen, die umweltverträglich ist und gleichzeitig verbesserte elastische Eigenschaften sowie eine einfachere Verarbeitbarkeit ermöglicht.

Diese Aufgabe wird durch die in den Ansprüchen gekennzeichneten Ausführungsformen gelöst.

Insbesondere wird erfindungsgemäß eine sekundäre galvanische Zelle bereitgestellt, umfassend eine Kathode, eine Anode und einen Separator, der zwischen der Kathode und der Anode angeordnet ist, wobei die Kathode ein erstes elastomeres Polymer umfasst, welches mit einem ersten Füllstoff als Kathodenmaterial gefüllt ist, wobei die Anode ein zweites elastomeres Polymer umfasst, welches mit einem zweiten Füllstoff als Anodenmaterial gefüllt ist, wobei der Separator ein drittes elastomeres Polymer umfasst, wobei das erste elastomere Polymer, das zweite elastomere Polymer und das dritte elastomere Polymer unabhängig voneinander aus vernetzungsfähigen Dienkautschuken ausgewählt sind, und wobei zumindest eines von dem ersten elastomeren Polymer, dem zweiten elastomeren Polymer und dem dritten elastomeren Polymer eine ionische Flüssigkeit und/oder ein elektrisch leitfähiges Polymer enthält.

Erfindungsgemäß wird somit eine sekundäre galvanische Zelle bereitgestellt, bei der Kathode, Anode und Separator auf einem elastomeren Polymer basieren. Damit können diese Elemente flexibel ausgestaltet werden, so dass auch die gesamte sekundäre galvanische Zelle flexibel sein kann.

Die Kathode umfasst ein erstes elastomeres Polymer. Dieses erste elastomere Polymer wird nachfolgend auch als elastomeres Polymer der Kathode bezeichnet. Vorzugsweise wird die Kathode im Wesentlichen durch das erste elastomere Polymer gebildet. Gemäß einer bevorzugten Ausführungsform ist die Kathode flexibel ausgebildet. Im Rahmen der vorliegenden Erfindung wird die Kathode als flexibel bezeichnet, wenn das erste Elastomer eine verbleibende Verformung von höchstens 50% nach 100% Dehnung (nach ASTM D1566-98) aufweist.

Das erste elastomere Polymer kann jedweder geeignete, vernetzungsfähige Dienkautschuk sein. Gemäß einer bevorzugten Ausführungsform der vorliegenden Erfindung ist das erste elastomere Polymer aus der Gruppe, bestehend aus Acrylnitril-Butadien-Kautschuk (NBR), Carboxylgruppen-haltigem Nitril-Kautschuk (XNBR), Ethylen-Vinylacetat-Copolymer (EVAC), Ethylen-Vinylacetat-Kautschuk (EVM), hydriertem Acrylnitril-Butadien-Kautschuk (HNBR), Ethylen-Acrylat-Kautschuk (AEM), Chlorpolyethylen-Kautschuk (CM), Chlorsulphonyl-Polyethylen-Kautschuk (CSM), Ethylen-Propylen-Dien-Kautschuk (EPDM), Ethylen-Propylen-Kautschuk (EPM), Epichlorhydrin-Copolymer-Kautschuk (ECO), Butadien-Kautschuk (BR), Isobuten-Isopren-Kautschuk (IIR), Isopren-Kautschuk (IR), Natur-Kautschuk (NR), Styrol-Butadien-Kautschuk (SBR), Methyl-Phenyl-Vinyl-Silicon-Kautschuk (PVMQ), Methyl-Vinyl-Silicon-Kautschuk (VMQ) und Kombinationen davon, ausgewählt. Insbesondere können auch Blends aus zwei oder mehr der vorstehend genannten Elastomere zum Einsatz kommen.

Das erste elastomere Polymer ist mit einem ersten Füllstoff als Kathodenmaterial gefüllt. Dieser erste Füllstoff wird nachfolgend auch als Kathoden-Füllstoff bezeichnet. Dieser Füllstoff ist als Kathodenmaterial in dem ersten elastomeren Polymer enthalten, um so die Funktion als Kathode zu ermöglichen. Der erste Füllstoff kann homogen oder inhomogen in dem ersten elastomeren Polymer verteilt sein. Gemäß einer bevorzugten Ausführungsform ist der erste Füllstoff homogen in dem ersten elastomeren Polymer verteilt.

Bei dem Füllstoff kann es sich um jeden geeigneten Stoff handeln, der als Kathodenmaterial in dem ersten elastomeren Polymer geeignet ist. Gemäß einer bevorzugten Ausführungsform ist der erste Füllstoff aus der Gruppe, bestehend aus metallorganischen Gerüsten ("*metall-organic frameworks; MOFs*"), Ruß, Graphen, Graphit, Kohlenstoffnanoröhren (single- oder multiwall), Silica, Zeolithen, Metallnanopartikeln, Metallsalznanopartikeln und Kombinationen davon, ausgewählt. Bei den Metallnanopartikeln handelt es sich beispielsweise um Nanofasern, Nanodrähte, Nanosphären und/oder Nanoröhren aus zumindest einem Metall, ausgewählt aus Fe, Zn, Cu, Ag, Au, Sn, Sb, Bi und Kombinationen davon. Bei den Metallsalznanopartikeln handelt es sich beispielsweise um Nanofasern, Nanodrähte, Nanosphären und/oder Nanoröhren aus zumindest einem Metallsalz, ausgewählt aus einem Lithiumsalz, einem Zinksalz, einem Vanadiumsalz, einem Titansalz und Kombinationen davon. Bevorzugte Metallsalze sind LiMPO₄, LiMO₂, Li₂MPO₄F, Li₄Ti₅O₁₂, LiMn₂O₄, ZnCo₂O₄, V₂O₅ und Na₂Ti₃O₇, wobei M Fe, Ni, Mn oder Co ist.

Gemäß einer besonders bevorzugten Ausführungsform ist der erste Füllstoff aus der Gruppe, bestehend aus metallorganischen Gerüsten, Ruß, Graphen, Graphit, Kohlenstoffnanoröhren, Silica, Zeolithen und Kombinationen davon, ausgewählt.

Der Füllstoff kann in jedweder geeigneten Menge in dem ersten elastomeren Polymer enthalten sein. Vorzugsweise ist der Füllstoff in einer Menge von 0,1 bis 250 phr, besonders bevorzugt in einer Menge von 1 bis 100 phr und ganz besonders bevorzugt in einer Menge von 2 bis 10 phr in dem ersten elastomeren Polymer enthalten. Die verwendete Menge kann in geeigneter Weise in Abhängigkeit von dem verwendeten Füllstoff gewählt werden. Für Silica als Füllstoff liegt der bevorzugte Bereich beispielsweise bei 20 bis 250 phr. Für Ruß, Graphen oder Kohlenstoffnanoröhren kann der Gehalt geringer sein und liegt vorzugsweise in dem Bereich von 0,1 bis 30 phr. Für größere Partikel oder Fasern beträgt der Anteil vorzugsweise zwischen 10 phr und 150 phr, besonders bevorzugt zwischen 20 und 100 phr.

Die Anode umfasst ein zweites elastomeres Polymer. Dieses zweite elastomere Polymer wird nachfolgend auch als elastomeres Polymer der Anode bezeichnet. Vorzugsweise wird die Anode im Wesentlichen durch das zweite elastomere Polymer gebildet. Gemäß einer bevorzugten Ausführungsform ist die Anode flexibel ausgebildet. Im Rahmen der vorliegenden Erfindung wird die Anode als flexibel bezeichnet, wenn das zweite Elastomer eine verbleibende Verformung von höchstens 50% nach 100% Dehnung (nach ASTM D1566-98) aufweist.

Das zweite elastomere Polymer kann jedweder geeignete, vernetzungsfähige Dienkautschuk sein. Gemäß einer bevorzugten Ausführungsform der vorliegenden Erfindung ist das zweite elastomere Polymer aus der Gruppe, bestehend aus Acrylnitril-Butadien-Kautschuk (NBR), Carboxylgruppen-haltigem Nitril-Kautschuk (XNBR), Ethylen-Vinylacetat-Copolymer (EVAC), Ethylen-Vinylacetat-Kautschuk (EVM), hydriertem Acrylnitril-Butadien-Kautschuk (HNBR), Ethylen-Acrylat-Kautschuk (AEM), Chlorpolyethylen-Kautschuk (CM), Chlorsulphonyl-Polyethylen-Kautschuk (CSM), Ethylen-Propylen-Dien-Kautschuk (EPDM), Ethylen-Propylen-Kautschuk (EPM), Epichlorhydrin-Copolymer-Kautschuk (ECO), Butadien-Kautschuk (BR), Isobuten-Isopren-Kautschuk (IIR), Isopren-Kautschuk (IR), Natur-Kautschuk (NR), Styrol-Butadien-Kautschuk (SBR), Methyl-Phenyl-Vinyl-Silicon-Kautschuk (PVMQ), Methyl-Vinyl-Silicon-Kautschuk (VMQ) und Kombinationen davon, ausgewählt. Insbesondere können auch Blends aus zwei oder mehr der vorstehend genannten Elastomere zum Einsatz kommen.

Das zweite elastomere Polymer ist mit einem zweiten Füllstoff als Anodenmaterial gefüllt. Dieser zweite Füllstoff wird nachfolgend auch als Anoden-Füllstoff bezeichnet. Dieser Füllstoff ist als Anodenmaterial in dem zweiten elastomeren Polymer enthalten, um so die Funktion als Anode zu ermöglichen. Der zweite Füllstoff kann homogen oder inhomogen in dem zweiten elastomeren Polymer verteilt sein. Gemäß einer bevorzugten Ausführungsform ist der zweite Füllstoff homogen in dem zweiten elastomeren Polymer verteilt.

Bei dem Füllstoff kann es sich um jeden geeigneten Stoff handeln, der als Anodenmaterial in dem zweiten elastomeren Polymer geeignet ist. Der zweite Füllstoff kann gleich oder verschieden zu dem ersten Füllstoff sein. Gemäß einer bevorzugten Ausführungsform ist der zweite Füllstoff aus der Gruppe, bestehend aus metallorganischen Gerüsten ("*metall-organic frameworks; MOFs*"), Ruß, Graphen, Graphit, Kohlenstoffnanoröhren (single- oder multiwall), Silica, Zeolithen, Metallnanopartikeln, Metallsalznanopartikeln und Kombinationen davon, ausgewählt. Bei den Metallnanopartikeln handelt es sich beispielsweise um Nano fasern, Nanodrähte, Nanosphären und/oder Nanoröhren aus zumindest einem Metall, ausgewählt aus Fe, Zn, Cu, Ag, Au, Sn, Sb, Bi und Kombinationen davon. Bei den Metallsalznanopartikeln handelt es sich beispielsweise um Nanofasern, Nanodrähte, Nanosphären und/oder Nanoröhren aus zumindest einem Metallsalz, ausgewählt aus einem Lithiumsalz, einem Zinksalz, einem Vanadiumsalz, einem Titansalz und Kombinationen davon. Bevorzugte Metallsalze sind LiMPO₄, LiMO₂, Li₂MPO₄F, Li₄Ti₅O₁₂, LiMn₂O₄, ZnCo₂O₄, V₂O₅ und Na₂Ti₃O₇, wobei M Fe, Ni, Mn oder Co ist.

Gemäß einer besonders bevorzugten Ausführungsform ist der zweite Füllstoff aus der Gruppe, bestehend aus Metallnanopartikeln, Metallsalznanopartikeln und Kombinationen davon, ausgewählt.

Gemäß einer ganz besonders bevorzugten Ausführungsform ist der erste Füllstoff aus der Gruppe, bestehend aus metallorganischen Gerüsten, Ruß, Graphen, Graphit, Kohlenstoffnanoröhren, Silica, Zeolithen und Kombinationen davon, ausgewählt, und der zweite Füllstoff ist aus der Gruppe, bestehend aus Metallnanopartikeln, Metallsalznanopartikeln und Kombinationen davon, ausgewählt.

Der Füllstoff kann in jedweder geeigneten Menge in dem zweiten elastomeren Polymer enthalten sein. Vorzugsweise ist der Füllstoff in einer Menge von 0,1 bis 250 phr, besonders bevorzugt in einer Menge von 1 bis 100 phr und ganz besonders bevorzugt in einer Menge von 2 bis 10 phr in dem zweiten elastomeren Polymer enthalten. Die verwendete Menge kann in geeigneter Weise in Abhängigkeit von dem verwendeten Füllstoff gewählt werden. Für Silica als Füllstoff liegt der bevorzugte Bereich beispielsweise bei 20 bis 250 phr. Für Ruß, Graphen oder Kohlenstoffnanoröhren kann der Gehalt geringer sein und liegt vorzugsweise in dem Bereich von 0,1 bis 30 phr. Für größere Partikel oder Fasern beträgt der Anteil vorzugsweise zwischen 10 phr und 150 phr, besonders bevorzugt zwischen 20 und 100 phr.

Der Separator ist zwischen der Kathode und der Anode angeordnet und hat die Aufgabe, Kathode und Anode räumlich und elektrisch zu trennen.

Der Separator umfasst ein drittes elastomeres Polymer. Dieses dritte elastomere Polymer wird nachfolgend auch als elastomeres Polymer des Separators bezeichnet. Vorzugsweise wird der Separator im Wesentlichen durch das dritte elastomere Polymer gebildet. Gemäß einer bevorzugten Ausführungsform ist der Separator flexibel ausgebildet. Im Rahmen der vorliegenden Erfindung wird der Separator als flexibel bezeichnet, wenn das dritte Elastomer eine verbleibende Verformung von höchstens 50% nach 100% Dehnung (nach ASTM D1566-98) aufweist. Der Separator kann beispielsweise in Form von einer Membran vorliegen.

Das dritte elastomere Polymer kann jedweder geeignete, vernetzungsfähige Dienkautschuk sein. Gemäß einer bevorzugten Ausführungsform der vorliegenden Erfindung ist das dritte elastomere Polymer aus der Gruppe, bestehend aus Acrylnitril-Butadien-Kautschuk (NBR), Carboxylgruppen-haltigem Nitril-Kautschuk (XNBR), Ethylen-Vinylacetat-Copolymer (EVAC), Ethylen-Vinylacetat-Kautschuk (EVM), hydriertem Acrylnitril-Butadien-Kautschuk (HNBR), Ethylen-Acrylat-Kautschuk (AEM), Chlorpolyethylen-Kautschuk (CM), Chlorsulphonyl-Polyethylen-Kautschuk (CSM), Ethylen-Propylen-Dien-Kautschuk (EPDM), Ethylen-Propylen-Kautschuk (EPM), Epichlorhydrin-Copolymer-Kautschuk (ECO), Butadien-Kautschuk (BR), Isobuten-Isopren-Kautschuk (IIR), Isopren-Kautschuk (IR), Natur-Kautschuk (NR), Styrol-Butadien-Kautschuk (SBR), Methyl-Phenyl-Vinyl-Silicon-Kautschuk (PVMQ), Methyl-Vinyl-Silicon-Kautschuk (VMQ) und Kombinationen davon, ausgewählt. Insbesondere können auch Blends aus zwei oder mehr der vorstehend genannten Elastomere zum Einsatz kommen.

Gemäß einer bevorzugten Ausführungsform sind das erste elastomere Polymer, das zweite elastomere Polymer sowie das dritte elastomere Polymer im Wesentlichen frei von fluorhaltigen Polymerkomponenten. Im Rahmen der vorliegenden Erfindung wird unter dem Begriff "im Wesentlichen frei" verstanden, dass das Polymer weniger als 5 phr fluorhaltige Polymerkomponenten enthält. Vorzugsweise enthalten das erste, zweite und dritte elastomere Polymer weniger als 1 phr fluorhaltige Polymerkomponenten. Beispiele für fluorhaltige Polymerkomponenten bzw. Polymere sind Perfluorkautschuk (FFKM), Fluor-Kautschuk (FKM), Fluor-Silicon-Kautschuk (FVMQ) oder Polyvinylidenfluorid (PVDF).

Das erste elastomere Polymer, das zweite elastomere Polymer sowie das dritte elastomere Polymer können sowohl in vulkanisierter Form als auch in unvulkanisierter Form vorliegen. Gemäß einer bevorzugten Ausführungsform liegen das erste elastomere Polymer, das zweite elastomere Polymer sowie das dritte elastomere Polymer vulkanisiert vor.

Zumindest eines von dem ersten elastomeren Polymer, dem zweiten elastomeren Polymer und dem dritten elastomeren Polymer enthält eine ionische Flüssigkeit und/oder ein elektrisch leitfähiges Polymer. Die ionische Flüssigkeit und/oder das elektrisch leitfähige Polymer können in jedweder geeigneten Menge in dem ersten, zweiten und/oder dritten elastomeren Polymer enthalten sein. Vorzugsweise ist die ionische Flüssigkeit in einer Menge von 1 bis 200 phr, besonders bevorzugt in einer Menge von 5 bis 150 phr und ganz besonders bevorzugt in einer Menge von 10 bis 120 phr enthalten. Diese Mengen beziehen sich auf die Gesamtmenge an ionischer Flüssigkeit im ersten, zweiten und dritten elastomeren Polymer. Der Anteil des elektrisch leitfähigen Polymers beträgt üblicherweise höchstens 95 Gew.-%, vorzugweise 20 bis 80 Gew.-%, bezogen auf den Gesamtpolymergehalt.

Als ionische Flüssigkeit kann jedwede geeignete ionische Flüssigkeit verwendet werden. Vorzugsweise ist das Kation der ionischen Flüssigkeit aus der Gruppe, bestehend aus Alkalimetallionen, Erdalkalimetallionen, Imidazolium, Vinylimidazolium, Pyridinium, Pyrrolidinium, Guanidinium, Piperidinium, Morpholinium, Ammonium, Phosphonium und Kombinationen davon, ausgewählt, und das Anion der ionischen Flüssigkeit ist aus der Gruppe, bestehend aus Halogeniden, Perchlorat, Tetrafluorborat, Trifluoracetat, Hexafluorophosphat, Phosphinaten, Tosylat, Triflat, Bis(trifluormethansulfonyl)amid, Bis(fluorsulfonyl)imid, Bis(trifluormethansulfonyl)imid (TFSI), Dicyanamid, Tris(pentafluorethyl)trifluorphosphat, Dimethylsulfat, Difluor(oxalato)borat (DFOB), Bis(oxalato)borat (BOB), Trifluormethansulfonat und Kombinationen davon, ausgewählt.

Bei der ionischen Flüssigkeit ist das etwaige Vorhandensein fluorhaltige Komponenten weniger kritisch, da die ionische Flüssigkeit insgesamt nur einen geringeren Anteil an der Gesamtbatterie im Vergleich zu dem ersten, zweiten und dritten elastomeren Polymer ausmacht. Bei den Anionen der ionischen Flüssigkeit sind dennoch insbesondere die fluorfreien Anionen bevorzugt.

Gemäß einer bevorzugten Ausführungsform enthält zumindest das dritte elastomere Polymer die ionische Flüssigkeit. Es ist damit bevorzugt, dass die ionische Flüssigkeit insbesondere in dem Separator enthalten ist. Zusätzlich kann aber auch das erste elastomere Polymer und/oder das zweite elastomere Polymer die ionische Flüssigkeit enthalten.

Das elektrisch leitfähige Polymer kann jedwedes geeignete elektrisch leitfähige Polymer sein. Vorzugsweise ist das elektrisch leitfähige Polymer aus der Gruppe, bestehend aus Homopolymeren von Polypyrrol, Polythiophen, Poly(p-phenylenvinylen), Polyacetylen, Poly(p-phenylen), Poly(3-alkylthiophen), Polyanilin, Poly-3,4-ethylendioxythiophen (PEDOT) und Kombinationen davon, sowie Copolymeren aus einem elastomeren Polymer und einem leitfähigen Polymer, wobei das leitfähige Polymer vorzugsweise aus Polypyrrol, Polythiophen, Poly(p-phenylenvinylen), Polyacetylen, Poly(p-phenylen), Poly(3-alkylthiophen), Polyanilin, Poly-3,4-ethylendioxythiophen (PEDOT) und Kombinationen davon ausgewählt ist, ausgewählt. Besonders bevorzugt ist das elektrisch leitfähige Polymer aus der Gruppe, bestehend aus Homopolymeren von Polyanilin oder Poly-3,4-ethylendioxythiophen (PEDOT), Copolymeren aus einem elastomeren Polymer und einem leitfähigen Polymer, und Blends von mindestens einem elastomeren Polymer und mindestens einem leitfähigen Polymer, ausgewählt. In einem Blend macht das leitfähige Polymer einen Anteil am Gesamtpolymergehalt von höchsten 95 Gew.-%, vorzugsweise von 20 bis 80 Gew.-% aus. Das elastomere Polymer kann eines der Polymere sein, die vorstehend als erste, zweite und dritte elastomere Polymere beschrieben wurden.

Gemäß einer bevorzugten Ausführungsform enthält zumindest das dritte elastomere Polymer das elektrisch leitfähige Polymer. Es ist damit bevorzugt, dass das elektrisch leitfähige Polymer insbesondere in dem Separator enthalten ist. Zusätzlich kann aber auch das erste elastomere Polymer und/oder das zweite elastomere Polymer das elektrisch leitfähige Polymer enthalten. Dieses kann beispielsweise als Blend zusammen mit dem ersten und/oder zweiten elastomeren Polymer vorliegen. Geeignete elektrisch leitfähige Polymere in Verbindung mit dem ersten und/oder zweiten elastomeren Polymer sind beispielsweise Polypyrrol, Polythiophen, Poly(p-phenylenvinylen), Polyacetylen, Poly(p-phenylen), Poly(3-alkylthiophen), Polyanilin, Poly-3,4-ethylendioxythiophen (PEDOT) und Kombinationen davon. Auf diese Weise ist es möglich, die Leitfähigkeit der Kathode und/oder der Anode zu erhöhen, was die Funktion als Kathode und/oder Anode weiter verbessert.

Gemäß einer weiteren bevorzugten Ausführungsform ist die erfindungsgemäße sekundäre galvanische Zelle flexibel. Im Rahmen der vorliegenden Erfindung wird die sekundäre galvanische Zelle als flexibel bezeichnet, wenn das erste Elastomer, das zweite Elastomer und das dritte Elastomer eine verbleibende Verformung von höchstens 50% nach 100% Dehnung (nach ASTM D1566-98) aufweisen.

Die vorliegende Erfindung betrifft ferner ein Verfahren zur Herstellung einer sekundären galvanischen Zelle, umfassend eine Kathode, eine Anode und einen Separator, wobei das Verfahren die Schritte
1) des Bereitstellens der Kathode, welche ein erstes elastomeres Polymer umfasst, welches mit einem ersten Füllstoff als Kathodenmaterial gefüllt ist,
2) des Bereitstellens der Anode, welche ein zweites elastomeres Polymer umfasst, welches mit einem zweiten Füllstoff als Anodenmaterial gefüllt ist, und
3) des Anordnens des Separators, welcher ein drittes elastomeres Polymer umfasst, zwischen der Kathode und der Anode,
umfasst, wobei das erste elastomere Polymer, das zweite elastomere Polymer und das dritte elastomere Polymer unabhängig voneinander aus vernetzungsfähigen Dienkautschuken ausgewählt sind, und wobei zumindest eines von dem ersten elastomeren Polymer, dem zweiten elastomeren Polymer und dem dritten elastomeren Polymer eine ionische Flüssigkeit und/oder ein elektrisch leitfähiges Polymer enthält. Die einzelnen Komponenten können dabei die Komponenten sein, die vorstehend in Bezug auf die erfindungsgemäße sekundäre galvanische Zelle beschrieben wurden.

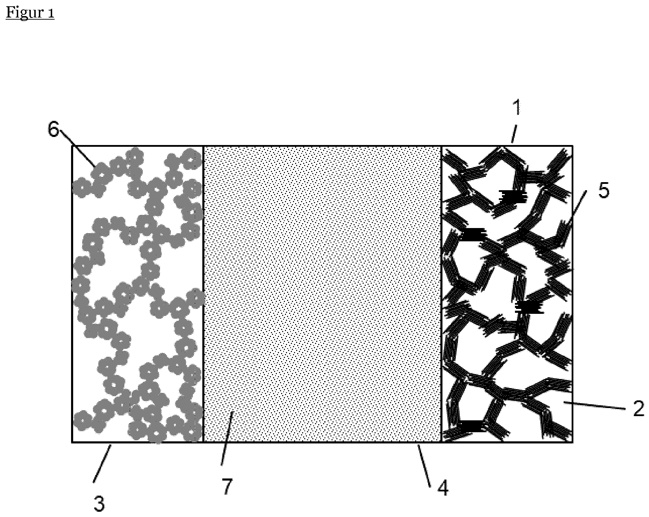

Eine bevorzugte Ausführungsform der vorliegenden Erfindung ist nachfolgend in Bezug auf Figur 1 näher erläutert. Wie in dieser Figur dargestellt, umfasst die erfindungsgemäße sekundäre galvanische Zelle 1 eine Kathode 2, eine Anode 3 und einen Separator 4, der zwischen der Kathode 2 und der Anode 3 angeordnet ist, wobei die Kathode 2 ein erstes elastomeres Polymer umfasst, welches mit einem ersten Füllstoff 5 als Kathodenmaterial gefüllt ist, wobei die Anode 3 ein zweites elastomeres Polymer umfasst, welches mit einem zweiten Füllstoff 6 als Anodenmaterial gefüllt ist, und wobei der Separator 4 ein drittes elastomeres Polymer umfasst, wobei in dieser bevorzugten Ausführungsform der vorliegenden Erfindung nur das dritte elastomere Polymer eine ionischen Flüssigkeit und/oder ein elektrisch leitfähigen Polymer 7 enthält. Die Anordnung der Anode, Kathode und des Separators kann sowohl in Reihe als auch kreisförmig (konzentrisch) erfolgen.

Die erfindungsgemäße galvanische Zelle weist durch Verwendung von in der Elektronik nicht üblichen Polymeren eine verbesserte Umweltverträglichkeit auf und hat den weiteren Vorteil, dass sie flexibel ausgestaltet werden kann, wobei die flexiblen Eigenschaften der galvanischen Zelle in geeigneter Weise eingestellt werden können. Das ermöglicht ihre Verwendung in zahlreichen technischen Anwendungen, insbesondere in Verbindung mit elastomeren Produkten bzw. Bauteilen.

Die vorliegende Erfindung betrifft weiterhin eine wiederaufladbare Batterie, umfassend die erfindungsgemäße sekundäre galvanische Zelle.

Die vorliegende Erfindung betrifft ferner die Verwendung der erfindungsgemäßen sekundären galvanischen Zelle, der erfindungsgemäßen wiederaufladbaren Batterie oder der durch das erfindungsgemäße Verfahren erhältlichen sekundären galvanischen Zelle zur Energiespeicherung in Luftfahrtanwendungen, in Fahrzeuganwendungen, in der Robotik, in Wearables, in kybernetischen Anwendungen sowie in Kautschukanwendungen, wie beispielsweise Reifen, Schuhsohlen, Förderbändern oder Schläuchen.

Die vorliegende Erfindung betrifft ferner die Verwendung der erfindungsgemäßen sekundären galvanischen Zelle, der erfindungsgemäßen wiederaufladbaren Batterie oder der durch das erfindungsgemäße Verfahren erhältlichen sekundären galvanischen Zelle zur Energieversorgung von Sensoren sowie von Sende- und Empfängergeräten zur Signalverarbeitung.

Die erfindungsgemäße sekundäre galvanische Zelle bzw. die entsprechende wiederaufladbare Batterie haben den Vorteil, dass sie in flexible Elemente wie Kautschuk- bzw. Gummikomponenten integriert werden können. Dies ist beispielsweise für Batterien von Elektroautos vorteilhaft. Um die Reichweite von Elektroautos weiter zu verbessern, ist es erforderlich, die Energiedichte in dem Fahrzeug zu erhöhen. Dies kann gemäß einem weiteren Aspekt der vorliegenden Erfindung dadurch erreicht werden, dass die Energie nicht nur in Form von herkömmlichen Batterien gespeichert wird, also in diskreten Batterien als separate Bauteile, sondern dass zusätzlich Energiespeicher in andere Fahrzeugteile, insbesondere in flexible Elemente wie Kautschukkomponenten integriert werden. Die vorliegende Erfindung betrifft somit ferner die Verwendung von Fahrzeugreifen, vorzugsweise umfassend die erfindungsgemäße sekundäre galvanische Zelle und/oder die erfindungsgemäße wiederaufladbare Batterie, als Energiespeicher für Elektrofahrzeuge.

### Bezugszeichenliste

- 1: Sekundären galvanische Zelle
- 2: Kathode
- 3: Anode
- 4: Separator
- 5: Erster Füllstoff
- 6: Zweiter Füllstoff
- 7: Ionische Flüssigkeit und/oder elektrisch leitfähiges Polymer

## Patentansprüche

1. Sekundäre galvanische Zelle (1), umfassend eine Kathode (2), eine Anode (3) und einen Separator (4), der zwischen der Kathode (2) und der Anode (3) angeordnet ist,
wobei die Kathode (2) ein erstes elastomeres Polymer umfasst, welches mit einem ersten Füllstoff (5) als Kathodenmaterial gefüllt ist,
wobei die Anode (3) ein zweites elastomeres Polymer umfasst, welches mit einem zweiten Füllstoff (6) als Anodenmaterial gefüllt ist,
wobei der Separator (4) ein drittes elastomeres Polymer umfasst,
wobei das erste elastomere Polymer, das zweite elastomere Polymer und das dritte elastomere Polymer unabhängig voneinander aus vernetzungsfähigen Dienkautschuken ausgewählt sind, und
wobei zumindest eines von dem ersten elastomeren Polymer, dem zweiten elastomeren Polymer und dem dritten elastomeren Polymer eine ionische Flüssigkeit und/oder ein elektrisch leitfähiges Polymer enthält.

2. Sekundäre galvanische Zelle (1) nach Anspruch 1, wobei der erste Füllstoff (5) und der zweite Füllstoff (6) unabhängig voneinander aus der Gruppe, bestehend aus metallorganischen Gerüsten, Ruß, Graphen, Graphit, Kohlenstoffnanoröhren, Silica, Zeolithen, Metallnanopartikeln, Metallsalznanopartikeln und Kombinationen davon, ausgewählt sind.

3. Sekundäre galvanische Zelle (1) nach Anspruch 1 oder 2, wobei der erste Füllstoff (5) und/oder der zweite Füllstoff (6) Metallnanopartikel umfasst, wobei die Metallnanopartikel aus der Gruppe, bestehend aus Nanofasern, Nanodrähten, Nanosphären und/oder Nanoröhren aus zumindest einem Metall, ausgewählt aus Fe, Zn, Cu, Ag, Au, Sn, Sb, Bi und Kombinationen davon, ausgewählt sind.

4. Sekundäre galvanische Zelle (1) nach einem der Ansprüche 1 bis 3, wobei der erste Füllstoff (5) und/oder der zweite Füllstoff (6) Metallsalznanopartikel umfasst, wobei die Metallsalznanopartikel aus der Gruppe, bestehend aus Nanofasern, Nanodrähten, Nanosphären und/oder Nanoröhren aus zumindest einem Metallsalz, ausgewählt aus einem Lithiumsalz, einem Zinksalz, einem Vanadiumsalz, einem Titansalz und Kombinationen davon, ausgewählt sind.

5. Sekundäre galvanische Zelle (1) nach Anspruch 4, wobei das zumindest eine Metallsalz aus der Gruppe, bestehend aus LiMPO₄, LiMO₂, Li₂MPO₄F, Li₄Ti₅O₁₂, LiMn₂O₄, ZₙCo₂O₄, V₂O₅ und Na₂Ti₃O₇, ausgewählt ist, wobei M Fe, Ni, Mn oder Co ist.

6. Sekundäre galvanische Zelle (1) nach einem der Ansprüche 1 bis 5, wobei der erste Füllstoff (5) aus der Gruppe, bestehend aus metallorganischen Gerüsten, Ruß, Graphen, Graphit, Kohlenstoffnanoröhren, Silica, Zeolithen und Kombinationen davon, ausgewählt ist, und wobei der zweite Füllstoff (6) aus der Gruppe, bestehend aus Metallnanopartikeln, Metallsalznanopartikeln und Kombinationen davon, ausgewählt ist.

7. Sekundäre galvanische Zelle (1) nach einem der Ansprüche 1 bis 6, wobei zumindest eines von dem ersten elastomeren Polymer, dem zweiten elastomeren Polymer und dem dritten elastomeren Polymer eine ionische Flüssigkeit enthält, wobei das Kation der ionischen Flüssigkeit aus der Gruppe, bestehend aus Alkalimetallionen, Erdalkalimetallionen, Imidazolium, Vinylimidazolium, Pyridinium, Pyrrolidinium, Guanidinium, Piperidinium, Morpholinium, Ammonium, Phosphonium und Kombinationen davon, ausgewählt ist, und wobei das Anion der ionischen Flüssigkeit aus der Gruppe, bestehend aus Halogeniden, Perchlorat, Tetrafluorborat, Trifluoracetat, Hexafluorophosphat, Phosphinaten, Tosylat, Triflat, Bis(trifluormethansulfonyl)amid, Bis(fluorsulfonyl)imid, Bis(trifluormethan-sulfonyl)imid (TFSI), Dicyanamid, Tris(pentafluorethyl)trifluorphosphat, Dimethylsulfat, Difluor(oxalato)borat (DFOB), Bis(oxalato)borat (BOB), Trifluormethansulfonat und Kombinationen davon, ausgewählt ist.

8. Sekundäre galvanische Zelle (1) nach Anspruch 7, wobei zumindest das dritte elastomere Polymer die ionische Flüssigkeit enthält und vorzugsweise zusätzlich auch das erste elastomere Polymer und/oder das zweite elastomere Polymer die ionische Flüssigkeit enthält.

9. Sekundäre galvanische Zelle (1) nach einem der Ansprüche 1 bis 8, wobei zumindest eines von dem ersten elastomeren Polymer, dem zweiten elastomeren Polymer und dem dritten elastomeren Polymer ein elektrisch leitfähiges Polymer enthält, welches aus der Gruppe, bestehend aus Homopolymeren von Polypyrrol, Polythiophen, Poly(p-phenylenvinylen), Polyacetylen, Poly(p-phenylen), Poly(3-alkylthiophen), Polyanilin, Poly-3,4-ethylendioxythiophen (PEDOT) und Kombinationen davon, sowie Copolymeren aus einem elastomeren Polymer und einem leitfähigen Polymer, wobei das leitfähige Polymer vorzugsweise aus Polypyrrol, Polythiophen, Poly(p-phenylenvinylen), Polyacetylen, Poly(p-phenylen), Poly(3-alkylthiophen), Polyanilin, Poly-3,4-ethylendioxythiophen (PEDOT) und Kombinationen davon ausgewählt ist, ausgewählt ist.

10. Sekundäre galvanische Zelle (1) nach Anspruch 9, wobei zumindest das dritte elastomere Polymer das elektrisch leitfähige Polymer enthält und vorzugsweise zusätzlich auch das erste elastomere Polymer und/oder das zweite elastomere Polymer das elektrisch leitfähige Polymer enthält.

11. Sekundäre galvanische Zelle (1) nach einem der Ansprüche 1 bis 10, wobei das erste elastomere Polymer, das zweite elastomere Polymer und das dritte elastomere Polymer unabhängig voneinander aus der Gruppe, bestehend aus Acrylnitril-Butadien-Kautschuk (NBR), Carboxylgruppen-haltigem Nitril-Kautschuk (XNBR), Ethylen-Vinylacetat-Copolymer (EVAC), Ethylen-Vinylacetat-Kautschuk (EVM), hydriertem Acrylnitril-Butadien-Kautschuk (HNBR), Ethylen-Acrylat-Kautschuk (AEM), Chlorpolyethylen-Kautschuk (CM), Chlorsulphonyl-Polyethylen-Kautschuk (CSM), Ethylen-Propylen-Dien-Kautschuk (EPDM), Ethylen-Propylen-Kautschuk (EPM), Epichlorhydrin-Copolymer-Kautschuk (ECO), Butadien-Kautschuk (BR), Isobuten-Isopren-Kautschuk (IIR), Isopren-Kautschuk (IR), Natur-Kautschuk (NR), Styrol-Butadien-Kautschuk (SBR), Methyl-Phenyl-Vinyl-Silicon-Kautschuk (PVMQ), Methyl-Vinyl-Silicon-Kautschuk (VMQ) und Kombinationen davon, ausgewählt ist.

12. Sekundäre galvanische Zelle (1) nach einem der Ansprüche 1 bis 11, welche flexibel ist.

13. Wiederaufladbare Batterie, umfassend die sekundäre galvanische Zelle (1) nach einem der Ansprüche 1 bis 12.

14. Verfahren zur Herstellung einer sekundären galvanischen Zelle (1), umfassend eine Kathode (2), eine Anode (3) und einen Separator (4), wobei das Verfahren die Schritte umfasst:
das Bereitstellen der Kathode (2), welche ein erstes elastomeres Polymer umfasst, welches mit einem ersten Füllstoff (5) als Kathodenmaterial gefüllt ist,
das Bereitstellen der Anode (3), welche ein zweites elastomeres Polymer umfasst, welches mit einem zweiten Füllstoff (6) als Anodenmaterial gefüllt ist, und
das Anordnen des Separators (4), welcher ein drittes elastomeres Polymer umfasst, zwischen der Kathode (2) und der Anode (3),
wobei das erste elastomere Polymer, das zweite elastomere Polymer und das dritte elastomere Polymer unabhängig voneinander aus vernetzungsfähigen Dienkautschuken ausgewählt sind, und
wobei zumindest eines von dem ersten elastomeren Polymer, dem zweiten elastomeren Polymer und dem dritten elastomeren Polymer eine ionische Flüssigkeit und/oder ein elektrisch leitfähiges Polymer enthält.

15. Verwendung der sekundären galvanischen Zelle (1) nach einem Ansprüche 1 bis 12, der wiederaufladbaren Batterie nach Anspruch 13 oder der durch das Verfahren gemäß Anspruch 14 erhältlichen sekundären galvanischen Zelle (1) zur Energiespeicherung in Luftfahrtanwendungen, in Fahrzeuganwendungen, in der Robotik, in Wearables, in kybernetischen Anwendungen sowie in Kautschukanwendungen, wie beispielsweise Reifen, Schuhsohlen, Förderbändern oder Schläuchen.
